(19) Europäisches Patentamt
European Patent Office
Office européen des brevets

(11) Veröffentlichungsnummer: **0 468 239 A2**

(12) **EUROPÄISCHE PATENTANMELDUNG**

(21) Anmeldenummer: **91111061.7**

(51) Int. Cl.$^5$: **C08G 77/32**, C08G 77/18

(22) Anmeldetag: **04.07.91**

(30) Priorität: **17.07.90 DE 4022661**

(43) Veröffentlichungstag der Anmeldung:
**29.01.92 Patentblatt 92/05**

(84) Benannte Vertragsstaaten:
**AT BE CH DE DK ES FR GB GR IT LI NL SE**

(71) Anmelder: **BAYER AG**
**W-5090 Leverkusen 1 Bayerwerk(DE)**

(72) Erfinder: **Weber, Wilhelm, Dr.**
**Heinrich-von-Kleist-Strasse 10**
**W-5090 Leverkusen 1(DE)**
Erfinder: **Achtenberg, Theo, Dipl.-Ing.**
**Im Bergischen Heim 6**
**W-5090 Leverkusen 3(DE)**
Erfinder: **Sockel, Karl-Heinz**
**Elisenstrasse 13**
**W-5090 Leverkusen 1(DE)**
Erfinder: **Sattlegger, Hans, Dr.**
**Auf dem Heidchen 9**
**W-5068 Odenthal-Glöbusch(DE)**

(54) **Verfahren zur Herstellung von Poly(diorganosiloxanen) mit Alkoxyendgruppen.**

(57) Die vorliegende Erfindung betrifft ein Verfahren von Triorganyloxysilyl- bzw. Diorganyloxyorganosilyl-endgestoppten Poly(diorganosiloxanen) aus $\alpha$, $\omega$-Dihydroxypoly(diorganosiloxanen) und Tetraorganyloxysilanen oder Triorganyloxyorganosilanen, wobei man als Katalysatoren stark basische Alkaliverbindungen einsetzt, die man nach dem Ablauf der gewünschten Reaktion und vor dem Eintritt von produktschädigenden Umlagerungsreaktionen neutralisiert.

EP 0 468 239 A2

Die Erfindung betrifft die Herstellung von Poly(diorganosiloxanen) mit Diorganyloxy-organosilyl- oder Triorganyloxysilyl-Endgruppen durch Umsetzung von $\alpha,\omega$-Dihydroxy-poly(diorganosiloxanen) mit Alkoxysilanen in Gegenwart von katalytisch wirkenden starken Alkalimetallbasen.

Es sind bereits mehrere Verfahren zur Herstellung der erfindungsgemäßen Polymere bzw. von solche Polymere enthaltenden Formulierungen bekannt geworden. Die Produkte werden zur Herstellung von 1-Komponenten Siliconpasten verwandt, die in Gegenwart von Feuchtigkeit zu Elastomeren aushärten, im folgenden - RTV-1K-Massen - genannt.

In US-PS 3 161 614 wird die Umsetzung von $\alpha,\omega$-Dihydroxypoly(diorganosiloxanen) mit mehrfunktionellen Halogensilanen, z.B. $SiCl_4$ oder $CH_3SiCl_3$, beschrieben. Die daraus resultierenden halogenhaltigen Polysiloxane werden dann in Gegenwart von Säurefängern durch Alkohole in Di- oder Triorganyloxysilylendgestoppte Polysiloxane überführt. In der selben Patentschrift wird auch die Umsetzung von $\alpha$-, $\omega$-Dihydroxypoly(diorganosiloxanen) mit Alkoxysilanen in Gegenwart geeigneter Katalysatoren, wie Amine und Metallcarboxylate, erwähnt.

In EP 21 859 und in EP 69 256 wird die Herstellung von RTV-1K-Massen beschrieben. Nach diesen Veröffentlichungen können $\alpha,\omega$-Dihydroxypoly(diorganosiloxane) in Gegenwart von Aminen mit Alkoxysilanen zu den erfindungsgemäßen Polymeren umgesetzt werden.

In EP 70 786 wird die Verwendung von Hydroxylaminderivaten anstelle von Aminen als Katalysatoren beschrieben.

Weiterhin sind gemischt-funktionelle Silane bekanntgeworden, die mit $\alpha,\omega$-Dihydroxypoly-(diorganosiloxanen) im Gegensatz zu reinen Organyloxy- bzw. Organyloxyorganosilanen auch ohne Verwendung von Katalysatoren zu den erfindungsgemäß hergestellten Polysiloxanen umgesetzt werden können. Hierunter fallen Alkoxyamidosilane (DE-PS 1 247 646), Alkoxy-oximinosilane (EP 98 369) und Alkoxyacetoxysilane (US-PS 3 296 195).

In DE-PS 3 523 206 wird die Verwendung von Ammoniumcarbamaten, bevorzugt $(CH_3)_2NH_2OCON(CH_3)_2$, als Katalysator für die Umsetzung von OH-endgestoppten Polysiloxanen mit Alkoxysilanen beansprucht.

In der E-PS 137 883werden als Katalysatoren für die gleiche Umsetzung Mischungen aus Aminen und Carbonsäuren beschrieben.

Alle bisher beschriebenen Verfahren zur Herstellung der genannten Polysiloxane weisen Nachteile auf. Das Verfahren der Umsetzung von $\alpha,\omega$-Dihydroxypoly(diorganosiloxanen) mit Halogensilanen mit anschließender Alkoholyse (US-PS 3 161 614) führt zu Polymeren, die korrosiv wirkende Ammoniumsalze enthalten und ist umständlich.

Gemischt funktionelle Alkoxysilane, die neben den Alkoxygruppen einen Amido-, Amino-, Oximino- oder Carboxylatorest tragen, ergeben mit $\alpha,\omega$-Dihydroxypoly(diorganosiloxanen) glatt die gewünschten Poly-(diorganosiloxane) mit Triorganyloxysilyl- oder Diorganyloxyorganosilyl-Endgruppen. Die Herstellung der Silane ist jedoch meist kostspielig und die Entfernung der Spaltprodukte macht bei der Herstellung der Formulierungen eigene Verfahrensschritte erforderlich oder ist in der Praxis undurchführbar. Die Entfernung der aus den erwähnten Silanen entstehenden Spaltprodukte wäre aber beispielsweise für die Formulierung von chemisch neutralen, transparenten Polysiloxanmassen wünschenswert. Deshalb ist die Umsetzung von OH-endgestoppten Polysiloxanen mit Alkoxysilanen in Gegenwart geeigneter Katalysatoren vorzuziehen.

Alle bisher beschriebenen Katalysatoren bzw. Katalysatorsysteme weisen den Nachteil auf, daß sie lange Reaktionszeiten und erhöhte Temperaturen erfordern. Außerdem müssen die Katalysatoren in substantiellen Mengen eingesetzt werden und sind meist nur schwer oder überhaupt nicht aus den Mischungen zu entfernen. Dies trifft zu für Amine, Hydroxylaminderivate und Gemische aus Aminen und Carbonsäuren. Das Verfahren unter Verwendung von Carbamaten, wie $(CH_3)_2NH_2OCON(CH_3)_2$, erwies sich zwar als besser geeignet, erfordert aber den Umgang mit substantiellen Mengen an Dimethylamin. Außerdem ist es auf die Endstoppung mit Methoxysilanen beschränkt. Gesucht war also ein Verfahren, das einfach und mit kurzer Reaktionszeit durchgeführt werden kann und das auch auf weniger reaktionsfähige Alkoxysilane, beispielsweise Ethoxysilane, anwendbar ist.

Die Verwendung starker Basen als Katalysatoren wäre eigentlich naheliegend. Ein solches Verfahren wurde bisher jedoch nicht beschrieben. Starke Basen, wie KOH oder NaOH kamen im Gegenteil nach dem bisherigen Stand der Technik nicht als Katalysatoren in Frage, weil sie rasch unerwünschte Umlagerungsreaktionen des Polymergerüsts herbeiführen. So ist beispielsweise von starken Basen wie KOH oder Kaliumsiloxanolat bekannt, daß in ihrer Gegenwart aus Tri- oder Tetraalkoxysilanen und Cyclotetra-(dimethylsiloxan) verzweigte Monoalkoxy-endgestoppte Polysiloxane entstehen (US-PS 2 909 549). Zu einem solchen Produkt reagieren auch $\alpha,\omega$-Dihydroxypoly(dimethylsiloxane) mit Methyltrimethoxysilan in Gegenwart von KOH. Aus derartigen Monoalkoxy-endgestoppten Polymeren, die beispielsweise die Endgruppe $-OSi(CH_3)_2OCH_3$ aufweisen, kann aber kein funktionsfähiges RTV-1K System hergestellt werden.

Überraschend wurde nun ein Verfahren zur Herstellung von Triorganyloxysilyl- bzw. Diorganyloxyorganosilyl-endgestoppten Poly(diorganosiloxanen) aus $\alpha,\omega$-Dihydroxypoly(diorganosiloxanen) und Tetraorganyloxysilanen oder Triorganyloxyorganosilanen gefunden, dadurch gekennzeichnet, daß man als Katalysatoren stark basische Alkaliverbindungen einsetzt, die man nach dem Ablauf der gewünschten Reaktion und vor dem Eintritt von produktschädigenden Umlagerungsreaktionen neutralisiert.

Obwohl die katalytische Wirkung starker Basen auf Gemische aus Polysiloxanen und Alkoxysilanen bekannt war, lag das erfindungsgemäße Verfahren keineswegs nahe. Es konnte nämlich nicht vorhergesagt werden, daß es gelingt, den erwünschten Endstoppungsschritt so durchzuführen, daß nicht bereits die unerwünschte Polymerumlagerung stattfindet.

Für das erfindungsgemäße Verfahren sind alle bekannten $\alpha,\omega$-Dihydroxypoly(diorganosiloxane) geeignet, wobei die Organylreste bevorzugt Methylreste sind. Als weiteres Beispiel sollen Poly(diorganosiloxane) genannt werden, die neben Methylgruppen noch Phenylgruppen enthalten.

Zur Umsetzung mit den $\alpha,\omega$-Dihydroxypoly(diorganosiloxanen) eignen sich Verbindungen folgenden Typs:

$R^1_m\ Si(OR^2)_{4-m}$,

wobei der Index m 0 oder 1 sein, $R^1$ einwertige Alkyl-, Aryl- oder Alkenylreste und $R^2$ einwertige Alkylreste umfassen kann. Als Beispiele können genannt werden: $Si(OCH_3)_4$, $Si(OC_2H_5)_4$, $Si[OCH(CH_3)_2]_4$, $CH_3Si(OCH_3)_3$, $CH_3Si(OC_2H_5)_3$, $CH_2=CHSi(OC_2H_5)_3$, $C_6H_5Si(OCH_3)_3$ und $CH_3Si[OCH_2CH(CH_3)_2]_3$. Der Rest $R^1$ kann aber auch funktionelle Gruppen tragen, wie beispielsweise in den Verbindungen $XCH_2CH_2CH_2Si(OR^2)_3$ mit

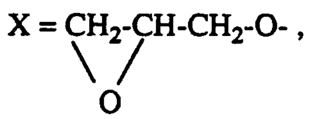

HS-, $H_2N$-, $R_2N$-, $H_2NCH_2CH_2NH$- oder $CH_2 = C(CH_3)COO$-. Einige dieser Verbindungen reagieren auch schon in Abwesenheit von Katalysatoren mit Dihydroxypoly(dimethylsiloxanen)(Aminoalkylsilane). In solchen Fällen können durch das erfindungsgemäße Verfahren Raktionszeiten verkürzt bzw. Reaktionstemperaturen gesenkt werden, was Vorteile bei der weiteren Verarbeitung der Produkte bringen kann (Eintopfverfahren).

Als Katalysatorbasen eignen sich starke Basen wie Alkalimetallhydroxide und deren Silanolate oder Alkoholate. Bevorzugt sind Kalium- und Natriumverbindungen. Tetraalkylammoniumhydroxide eignen sich ebenfalls, besitzen aber den Nachteil, aminische Bestandteile im Polymer zu hinterlassen. Ähnliches gilt für Alkaliamide. Die für die Katalyse erforderliche Basenkonzentration liegt zwischen 0,1 und 100 ppm. Sie wird davon beeinflußt, ob das Polysiloxan Reste von sauren, basischen oder als Puffer wirkenden Bestandteilen enthält, die aus dem Polymerisationsverfahren stammen.

Zur Neutralisation eignen sich starke und schwache Säuren wie HCl, $H_2SO_4$, $H_3PO_4$, Carbonsäuren und $CO_2$. Auch pyrogene Kieselsäure kann in Fällen, in denen eine Weiterverarbeitung zu kieselsäurehaltigen Mischungen vorgesehen ist, Verwendung finden. Bevorzugt sind HCl sowie HCl-freisetzende Additive wie Chlorsilane, beispielsweise $(CH_3)_3SiCl$, $(CH_3)_2SiCl_2$, $CH_3SiCl_3$ oder $SiCl_4$. Meist empfiehlt es sich, das saure Neutralisationsmittel im Überschuß zu verwenden.

Die basischen und sauren Hilfsstoffe bringt man am besten in einer verdünnten, mit dem Reaktionsmedium mischbaren Form ein. So kann beispielsweise KOH bzw. NaOH in den umzusetzenden Organyloxysilanen, gegebenenfalls unter Hinzufügung des entsprechenden freien Alkohols, gelöst werden.

Die Bedingungen, unter denen das erfindungsgemäße Verfahren durchgeführt werden kann, richten sich nach der Reaktivität des eingesetzten Organyloxysilans und nach der Stärke der eingesetzten Base. In den meisten Fällen kann das Verfahren bei Raumtemperatur ausgeführt werden. Die für die Endstoppung erforderliche Mindestreaktionszeit und der Zeitpunkt, wann neutralisiert werden muß, sind im Einzelfall zu ermitteln. So liegt beispielsweise bei Verwendung von KOH und Methyltrimethoxysilan der Zeitraum zwischen der Zugabe der Base und des Neutralisationsmittels zwischen 5 und 30 Sekunden. Mit NaOH dagegen muß man einen Zeitraum zwischen 5 und 20 Minuten einhalten. Die Zeiten sind außerdem von der verwendeten Katalysatormenge abhängig, so daß eine generelle Festlegung des Zeitraums für die Charakterisierung des erfindungsgemäßen Verfahrens nicht möglich ist. Die Reaktionszeit ist jedoch so zu wählen, daß die gewünschte Endstoppung vollständig erfolgt ist, d.h., daß kein SiOH mehr nachweisbar ist und daß andererseits schädliche Polymerumlagerungen ausbleiben. Letztere erkennt man durch gelpermeationschromatographische Analyse oder an Viskositätsveränderungen der Reaktionsmischung. Die unerwünschten

Polymerumlagerungen geben sich nämlich dadurch zu erkennen, daß mit überschüssigem Alkoxysilan eine Spaltung der Polymerkette einsetzt, die zu einer deutlichen Viskositätsabnahme führt. Die Viskosität und deren Abnahme wird naturgemäß durch den Überschuß an Organyloxysilan beeinflußt. Ein solcher Überschuß ist sinnvoll, um die Reaktion möglichst rasch zu vervollständigen. Der Überschuß an Alkoxysilan und der als Spaltprodukt entstehende Alkohol können nach der Neutralisation der starken Base durch Ausheizen entfernt werden. Für bestimmte Einsatzzwecke, beispielsweise in feuchtigkeitshärtenden Silicondichtstoffen, können bei bestimmten Rezepturen der Alkoxysilanüberschuß und der gebildete Alkohol im Polymer verbleiben.

Ist man, wie oben am Beispiel des Einsatzes von Methyltrimethoxysilan und Kaliumhydroxid erläutert, auf die genaue Einhaltung sehr kurzer Verweilzeiten angewiesen, empfiehlt sich eine kontinuierliche Verfahrensführung. Die basischen und sauren Hilfsstoffe können dann beispielsweise mit Hilfe von Dosierpumpen in Statikmischersystemen mit dem Reaktionsmedium vereinigt werden.

Ist der Einsatz der nach dem erfindungsgemäßen Verfahren hergestellten Polysiloxane in feuchtigkeitshärtenden RTV Massen beabsichtigt, kann das Verfahren auch in dem zur Herstellung dieser Massen vorgesehenen Mischaggregat als Eintopfverfahren durchgeführt werden. Sollen hierbei die reaktionsfähigen Methoxysilane Verwendung finden, ist der Einsatz von Na-Basen wegen der längeren Verweilzeiten gegenüber der Verwendung von Kaliumverbindungen vorzuziehen. Bei der Herstellung von Silicondichtstoffen kann es sinnvoll sein, pyrogene Kieselsäure zur Neutralisation der Base zu verwenden, da sie meist ohnehin einen wichtigen Mischungsbestandteil darstellt. Die Wahl des Neutralisationsmittels kann dabei jedoch von der Wahl der restlichen, zur Pastenherstellung vorgesehenen Hilfsstoffe beeinflußt werden.

Das erfindungsgemäße Verfahren soll anhand der folgenden Beispiele näher erläutert werden.

Beispiel 1

In einem Planetenmischer wurde eine Mischung von 55 Gew.-Teilen eines OH-endgestoppten Poly(dimethylsiloxans), das eine Viskosität von 50 Pa•s besaß, mit 1 Gew.-Teil Methyltrimethoxysilan hergestellt. In diese Mischung wurden 0,09 Gew.-Teile einer Katalysatorlösung von 4 % Natriumhydroxid und 1 % Methanol in Methyltrimethoxysilan eingerührt. Zehn Minuten nach der Zugabe des Katalysators wurden 0,73 Gew.-Teile einer Lösung von 1 % Dimethyldichlorsilan in Trimethylsilyl-endgestopptem Poly(dimethylsiloxan) der Viskosität 0,1 Pa•s zugegeben. Danach wurde das Reaktionsgemisch in einem Rotationsverdampfer zwei Stunden bei 140 °C und von 25 mbar ausgeheizt.

Die resultierende Polymermischung wurde folgendermaßen untersucht:

a) Viskositätsbestimmung mit einem Haake Rotationsviskosimeter,

b) gelpermeationschromatographische Analyse und

c) Vernetzungstest.

Bei dem unter c) beschriebenen Vernetzungstest wurden 100 Gew.-Teile der zu prüfenden Mischung mit 5 Gew.-Teilen einer Testlösung versetzt. Diese Lösung war unter Ausschluß von Luftfeuchtigkeit durch Auflösen von 20 % Dibutylzinnoxid in Tetraethoxysilan bei 100 °C hergestellt worden. Tritt nach der Zugabe der Testlösung ein rascher Viskositätsanstieg bis hin zur Vergelung ein, ist dies als Hinweis auf eine unvollständige Absättigung der SiOH-Gruppen des OH-endgestoppten Polysiloxans zu interpretieren. Bleibt die Vergelung aus und härtet die Testmischung bei Zutritt von Luftfeuchtigkeit von außen nach innen aus, kann auf die Existenz der gewünschten Endstoppung, beispielsweise $-OSi(OCH_3)_2CH_3$ geschlossen werden. Bleibt aber sowohl die rasche Vergelung wie auch die Aushärtung unter Zutritt von Luftfeuchtigkeit aus, oder entsteht nur langsam ein weicher, dünner Film, ist dies als Beweis dafür anzusehen, daß die unerwünschte Polymerumlagerung stattgefunden hat und verzweigte Polymere mit $-OSi(CH_3)_2OCH_3$ Endgruppen entstanden sind.

Die im Beispiel 1 erzielte Polymermischung besaß 24 Stunden nach der Herstellung eine Viskosität von 42 Pa•s. Die gelpermeationschromatographische Analyse ergab eine Molekülgrößenverteilung, die der des eingesetzten OH-endgestoppten Poly(dimethylsiloxans) entsprach. Der Vernetzungstest zeigte keine rasche Vergelung, sondern ergab nach 24 Stunden unter Zutritt von Luftfeuchtigkeit bei 2 mm Schichtdicke einen vollständig ausgehärteten Prüfling. Aus diesen Befunden wurde geschlossen, daß die gewünschte Umsetzung

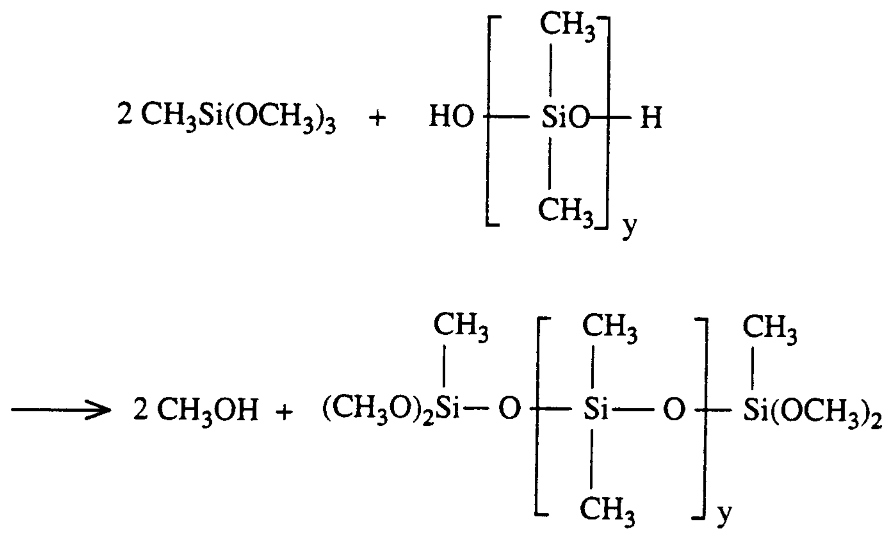

stattgefunden hatte.

Beispiel 2 (Vergleichsbeispiel):

Das Beispiel 1 wurde ohne Zugabe von KOH oder Dimethyldichlorsilan wiederholt. Die Mischung hatte eine Viskosität von 43 Pa•s und vergelte im Vernetzungstest bereits bei der Zugabe der Testlösung.

Beispiel 3 (Vergleichsbeispiel):

Das Beispiel 1 wurde ohne Zugabe von Dimethyldichlorsilan wiederholt. Die Reaktionsmischung besaß nach 24 Stunden eine Viskosität von 2 Pa•s. Die gelpermeationschromatographische Analyse ergab im Vergleich zu Beispiel 1 eine deutliche Verschiebung des Verteilungsmaximums zu kleinerer Molekülgröße. Im Vernetzungstest trat weder eine rasche Vergelung ein noch erfolgte unter Zutritt von Luftfeuchtigkeit Aushärtung. Nach 24 Stunden hatte sich lediglich eine schwach vernetzte Schicht an der Oberfläche gebildet.

Beispiel 4

55 Gew.-Teile des bereits im Beispiel 1 verwendeten Polysiloxans wurden mit 2 Gew.-Teilen Vinyltriethoxysilan vermischt. Dann wurden 0,18 Gew.-Teile einer Lösung von 4 % Kaliumhydroxid in Methanol zugegeben. Nach 10 Minuten wurden zur Neutralisation 0,5 Gew.-Teile einer Lösung von 2,5 % $H_3PO_4$ in Vinyltriethoxysilan zugegeben. Die Mischung besaß eine Viskosität von 34,5 Pa•s und verhielt sich im Vernetzungstest wie die Mischung aus Beispiel 1.

Beispiel 5

Das Beispiel soll zeigen, daß mit Hilfe des erfindungsgemäßen Verfahrens ein Silicondichtstoffe im "Eintopfverfahren" hergestellt werden kann.

In einem Planetenmischer wurden zu 55 Gew.-Teilen eines OH-funktionellen Poly(dimethylsiloxans) mit der Viskosität 50 Pa•s 0,5 Gew.-Teile einer Lösung von 0,7 % Natriumhydroxid und 1 % Methanol in Methyltrimethoxysilan gegeben. Dann wurde 10 Minuten lang gerührt und anschließend 0,25 Gew.-Teile einer Lösung von 3,4 % $H_3PO_4$ in Methyltrimethoxysilan hinzugefügt. Dann wurden nacheinander die folgenden Bestandteile zugemischt: 29 Gew.-Teile eines Trimethylsilyl-endgestoppten Poly-(dimethylsiloxans) der Viskosität 0,1 Pa•s, 9,5 Gew.-Teile einer hydrophoben pyrogenen Kieselsäure mit einer spezifischen Oberfläche von 130 $m^2/g$, 0,8 Gew.-Teile eines Silans mit der Formel $H_2NCH_2CH_2CH_2Si(OC_2H_5)_3$ sowie 0,3 Gew.-Teile einer Katalysatorlösung, bestehend aus 65 % Dibutylzinn-bis-(2-ethylhexanoat) und 35 % Toluol.

Die restliche Paste wurde in einer Schichtdicke von 2 mm 14 Tage lang bei 23 °C und 50 % relativer

Luftfeuchtigkeit ausgehärtet und in Anlehnung an DIN 53 504 geprüft:

| | |
|---|---|
| Zugfestigkeit: | 1,1 MPa |
| Zugspannung bei 100 % Dehnung: | 0,35 MPa |
| Bruchdehnung: | 400 % |

Zur Überprüfung der Lagerfähigkeit wurde die Paste in Tuben vor dem Zutritt von Luftfeuchtigkeit geschützt. Nach drei Monaten zeigte die Paste beim Ausspritzen keinerlei Vernetzungserscheinungen, härtete aber anschließend unter dem Einfluß der Luftfeuchtigkeit zu einem Elastomer aus.

## Patentansprüche

**1.** Verfahren zur Herstellung von Triorganyloxysilyl- bzw. Diorganyloxyorganosilyl-endgestoppten Poly(diorganosiloxanen) aus $\alpha,\omega$-Dihydroxypoly(diorganosiloxanen) und Tetraorganyloxysilanen oder Triorganyloxyorganosilanen, dadurch gekennzeichnet, daß man als Katalysatoren stark basische Alkaliverbindungen einsetzt, die man nach dem Ablauf der gewünschten Reaktion und vor dem Eintritt von produktschädigenden Umlagerungsreaktionen neutralisiert.

**2.** Verfahren nach Anspruch 1, dadurch gekennzeichnet, daß man Hydroxide, Alkoholate oder Silanolate des Natriums oder des Kaliums verwendet.